# EUROPÄISCHE PATENTSCHRIFT

(11) **EP 2 957 164 B1**
(45) Veröffentlichungstag und Bekanntmachung des Hinweises auf die Patenterteilung: **27.03.2019**
(21) Anmeldenummer: 15168800.9
(22) Anmeldetag: 22.05.2015
(51) Int. Cl.: A01D 61/02, A01D 61/00, B65G 23/44, A01D 41/14

(54) **SCHRÄGFÖRDERERZUSAMMENBAU FÜR EINEN MÄHDRESCHER**
INCLINED CONVEYOR ASSEMBLY FOR A COMBINE HARVESTER
ASSEMBLAGE DE CONVOYEUR-ÉLÉVATEUR POUR UNE MOISSONNEUSE-BATTEUSE

(30) Priorität: 18.06.2014 DE 102014211783; 27.03.2015 DE 102015205622
(43) Veröffentlichungstag der Anmeldung: 23.12.2015
(73) Patentinhaber: Deere & Company, Moline, IL 61265 (US)
(72) Erfinder: Rittershofer, Martin, 67663 Kaiserslautern (DE); Veit, Philipp, 06618 Molauer Land (DE)
(74) Vertreter: Holst, Sönke

(56) Entgegenhaltungen:
- EP-A1- 1 040 750
- EP-A1- 1 621 064
- WO-A1-99/32378
- FR-A- 895 738
- US-A- 5 030 173

## Beschreibung

Die vorliegende Erfindung bezieht sich auf einen Schrägfördererzusammenbau für einen Mähdrescher, mit einem Gehäuse, an dessen rückwärtigem Ende eine obere Schrägfördererwalze drehbar gelagert ist, einer am vorderen Ende des Gehäuses drehbar gelagerten, unteren Schrägfördererwalze, und mit einem um die untere Schrägfördererwalze und um die obere Schrägfördererwalze umlaufenden, endlosen Förderelement aus einem in sich flexiblen Material mit daran befestigten Mitnehmern, wobei eine erste der Schrägfördererwalzen gegenüber dem Gehäuse entlang einer gedachten Verbindungsgeraden zwischen den Schrägfördererwalzen auf die zweite Schrägfördererwalze zu und von ihr fort bewegbar angebracht ist.

### Stand der Technik

Selbstfahrende Mähdrescher umfassen ein Fahrgestell, das sich durch vordere, angetriebene Räder (oder Raupenlaufwerke) und rückwärtige, lenkbare Räder auf dem Boden abstützt. An der Vorderseite des Mähdreschers ist ein Schrägfördererzusammenbau angeordnet, an dessen vorderem Ende wiederum ein Erntevorsatz lösbar befestigt ist. Der Erntevorsatz kann beispielsweise als Schneidwerk mit einem Mähwerksbalken und einer darüber angeordneten Haspel und einer dahinter angeordneten Querförderschnecke bzw. einem Querförderband oder als Maispflücker mit Pflückeinheiten und einer Querförderschnecke ausgeführt sein. Beim Erntebetrieb gibt der Erntevorsatz das abgeschnittene oder aufgenommene Erntegut durch eine rückwärtige Abgabeöffnung an den Schrägfördererzusammenbau ab, der es wiederum in das Innere des Mähdreschers fördert, wo es ausgedroschen, getrennt und gereinigt wird.

Der Schrägfördererzusammenbau umfasst ein Gehäuse, in dem üblicherweise ein unterschlächtig arbeitender Kettenförderer um eine untere und eine obere Schrägfördererwalze umläuft, die drehbar am Gehäuse gelagert sind. Die untere Schrägfördererwalze ist rückwärtig der Abgabeöffnung des Erntevorsatzes angeordnet und die obere, angetriebene und durch Ritzel mit den Ketten des Kettenförderers zusammenwirkende Schrägfördererwalze übergibt das Erntegut einer (Axial- oder Tangential-) Dreschtrommel oder einer Beschleunigerwalze im Mähdrescher.

Es wurde auch ein unterschlächtig arbeitender Schrägfördererzusammenbau mit einem Gummi-Gewebe-Riemen vorgeschlagen, der quer angeordnete, von oben her in das Erntegut eingreifende Stahlleisten umfasst (DE 10 2009 036 104 A1). Der Riemen wird ebenfalls durch die obere Schrägfördererwalze angetrieben, die mit sich axial erstreckenden Nocken versehen ist, die zwischen Noppen an der Innenseite der Riemen eingreifen.

Der Förderer ist hinreichend zu spannen, um eine Drehmomentübertragung von der angetriebenen Schrägfördererwalze auf den Kettenförderer zu gewährleisten und zu verhindern, dass die Kette insbesondere bei hoher Belastung des Schrägförderers mit Erntegut an den Ritzeln überspringt. Im Stand der Technik erfolgt die Spannung von mit Ketten ausgestatteten Schrägförderern durch auf die untere Schrägfördererwalze wirkende Federn, die eine gewisse, hinreichende Vorspannung gewährleisten (US 4 362 005 A), oder durch Hydraulikzylinder (DE 199 25 691 A1, DE 10 2012 007 637 A1) oder nur durch Verstellen und anschließendes Fixieren der unteren Schrägfördererwalze in einer gewünschten Position (US 2 858 012 A). In der EP 1 621 064 A1 wird ein Riemen als federgespanntes Zugmittel des Schrägförderers erwähnt.

Da eine Federvorspannung bei Schrägförderern mit Gummi-Gewebe-Riemen den Nachteil hat, dass die Spannung entweder nicht hinreicht, ein Überspringen der Nocken des Riemens an der angetriebenen Schrägförderwalze zu verhindern oder derart groß sein muss, dass sich ein großer Verschleiß des Riemens ergibt, muss bei derartigen Schrägförderern die verstellbare Schrägförderwalze, analog zu US 2 858 012 A, in der korrekten Position arretiert werden, oder zumindest verhindert werden, dass sich die verstellbare Schrägfördererwalze näher als eine Soll-Position an die andere Schrägfördererwalze annähert. Die Bestimmung dieser korrekten Position erfolgt anhand einer Messung der Abstände zwischen benachbarten Nocken des Riemens, die anschließend in den Sollabstand zwischen den Drehachsen der Schrägfördererwalzen umzurechnen ist. Diese Vorgehensweise ist umständlich, zeitraubend und fehlerträchtig.

### Aufgabe

Es ist eine Aufgabe der vorliegenden Erfindung, die erwähnten Nachteile zu vermeiden.

### Lösung

Die vorliegende Erfindung wird durch die Ansprüche definiert.

Ein Schrägfördererzusammenbau für einen Mähdrescher umfasst ein Gehäuse, an dessen rückwärtigem Ende eine obere Schrägfördererwalze drehbar gelagert ist, eine am vorderen Ende des Gehäuses drehbar gelagerte, untere Schrägfördererwalze und ein um die untere Schrägfördererwalze und um die obere Schrägfördererwalze umlaufendes, endloses Förderelement aus einem in sich flexiblen Material mit daran befestigten Mitnehmern. Eine erste der Schrägfördererwalzen ist gegenüber dem Gehäuse entlang einer gedachten Verbindungsgeraden zwischen den Schrägfördererwalzen auf die zweite Schrägfördererwalze zu und von ihr fort bewegbar angebracht.

Um die erste, bewegbare Schrägfördererwalze einfacher und genauer als bisher in eine korrekte Position zu verbringen, ist eine Feder vorgesehen, die mit der ersten Schrägfördererwalze koppelbar ist. Im gekoppelten Zustand spannt diese Feder die - dann ansonsten frei entlang der besagten Verbindungsgeraden bewegliche - erste Schrägförderwalze mit einer von der zweiten Schrägfördererwalze fort gerichteten Kraft vor. Dabei wird gleichzeitig das Förderelement mit einer definierten Spannung beaufschlagt. In diesem Zustand befindet sich die erste Schrägfördererwalze in ihrer Soll-Position, die sie auch beim späteren Erntebetrieb einnehmen soll. Es wird nunmehr in diesem Zustand die Bewegung der ersten Schrägfördererwalze in Richtung auf die zweite Schrägfördererwalze zu auf eine sich durch die Kraft der Feder ergebende Soll-Position der ersten Schrägfördererwalze begrenzt.

Es wird somit im durch die Feder vorgespannten Zustand der ersten Schrägfördererwalze, in welchem diese sich in ihrer Soll-Position befindet, ein möglicher Bewegungsweg der ersten Schrägfördererwalze in Richtung auf die zweite Schrägfördererwalze zu auf die Soll-Position eingeschränkt. Die erste Schrägfördererwalze kann sich dann nicht über die Soll-Position hinaus in Richtung auf die zweite Schrägförderwalze bewegen. Dadurch erreicht man, dass die Spannung des Förderelements einem gewünschten Mindestwert, der zur Übertragung des Antriebsmoments von der angetriebenen Schrägfördererwalze auf das Förderelement erforderlich ist, entspricht, ihn aber auch nicht wesentlich überschreitet.

Die erste Schrägfördererwalze könnte sich (nach dem beschriebenen Einstellvorgang) zwar in die entgegengesetzte Richtung, d.h. von der zweiten Schrägfördererwalze hinweg, frei bewegen, es bietet sich jedoch an, sie auch in dieser Richtung festzusetzen, d.h. in der Soll-Position zu arretieren, nachdem die Soll-Position gefunden und der Bewegungsweg der ersten Schrägfördererwalze zur zweiten Schrägfördererwalze hin auf diese Position begrenzt wurde.

In der Regel ist die erste Schrägförderwalze die untere Schrägfördererwalze und die obere Schrägfördererwalze antreibbar. Es wäre jedoch auch möglich, die untere Schrägfördererwalze anzutreiben und/oder die obere Schrägfördererwalze positionsverstellbar zu gestalten.

Vorzugsweise ist die erste Schrägfördererwalze an beiden Enden bewegungsbeschränkbar oder arretierbar und mit je einer Feder koppelbar ist.

Die Feder kann entlastbar und/oder abnehmbar und anhand einer Lehre oder Skala mit einer definierten Vorspannung belastbar sein.

Bei einer möglichen Ausführungsform ist eine sich quer zur gedachten Verbindungsgeraden erstreckende, mit einer Öffnung versehene Konsole an der Außenseite des Gehäuses angebracht. Eine mit der Achse der ersten Schrägfördererwalze (insbesondere durch einen Zwischenboden) gekoppelte Schwenkachse kann endseitig ein sich entlang der gedachten Verbindungsgeraden erstreckendes Langloch des Gehäuses durchdringen. Die Achse der ersten Schrägfördererwalze kann mit einer sich entlang der Verbindungsgeraden erstreckenden Verstellstange verbunden sein, welche die Öffnung in der Konsole durchdringt und am äußeren, von der Achse beabstandeten Ende der Verstellstange mit einem ersten Ende der Feder gekoppelt ist, die sich mit ihrem zweiten Ende am Gehäuse, insbesondere an einem mit der Konsole gekoppelten U-Profil, abstützt. Die Begrenzung der Bewegung der ersten Schrägfördererwalze auf die Soll-Position kann dabei zwischen der Verstellstange und der Konsole vorgesehen ist.

Die Feder ist insbesondere eine Schraubenfeder, die auf Druck oder Zug arbeitet.

Die Begrenzung der Bewegung der ersten Schrägfördererwalze auf die Soll-Position kann durch eine an der Konsole zur Anlage kommende Mutter realisiert werden, die mit einem Gewinde der Verstellstange zusammenwirkt.

Zur Arretierung der ersten Schrägfördererwalze kann eine zweite, mit einem Gewinde der Verstellstange zusammenwirkende Mutter an einer zweiten Seite der Konsole zur Anlage bringbar sein.

### Ausführunqsbeispiel

Diese und andere Aufgaben, Merkmale und Vorteile der vorliegenden Erfindung werden dem Fachmann nach dem Lesen der folgenden detaillierten Beschreibung und angesichts der Zeichnungen offensichtlich, wobei die Bezugszeichen nicht zu einer einschränkenden Auslegung der Ansprüche herangezogen werden dürfen.
- Fig. 1: ist eine Seitenansicht eines Mähdreschers mit einem Schrägfördererzusammenbau.
- Fig. 2: zeigt eine vergrößerte seitliche Ansicht des unteren Bereichs des Schrägfördererzusammenbaus der Figur 1.

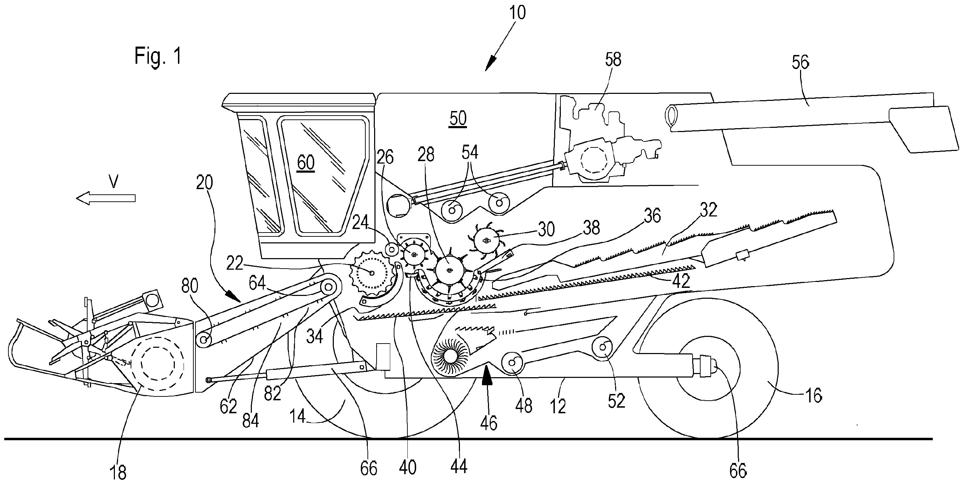

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V der Erntemaschine 10 im Erntebetrieb, die in der Figur 1 nach links verläuft. Die vorderen Räder 14 könnten auch durch Raupenlaufwerke ersetzt werden.

An den vorderen Endbereich der Erntemaschine 10 ist ein Erntevorsatz 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägfördererzusammenbau 20, an dem der Erntevorsatz 18 abnehmbar befestigt ist, einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 44 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet. Anstelle des dargestellten Mehrtrommeldreschwerks könnte eine beliebige andere Dresch- und Trenneinrichtung Verwendung finden, z.B. eine einzige Tangentialdreschtrommel mit nachfolgenden Strohschüttlern oder Trennrotoren oder eine Axialdresch- und Trenneinrichtung mit einem oder zwei Axialdresch- und Trennrotoren.

Das durch den Dreschkorb 34, den Separierkorb und die Strohschüttler 32 hindurchtretende, Körner und Verunreinigungen enthaltende Gemisch gelangt über Förderböden 40, 42 in eine Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden. Die genannten Systeme werden mittels eines Verbrennungsmotors 58 angetrieben und von einem Bediener aus einer Fahrerkabine 60 heraus kontrolliert und gesteuert.

Der Schrägfördererzusammenbau 20 umfasst ein Gehäuse 62, das um die sich horizontal und quer zur Vorwärtsrichtung erstreckende Achse einer oberen Schrägfördererwalze 64 drehbar am Fahrgestell 12 angelenkt ist. Die Verschwenkung des Schrägfördererzusammenbaus 20 um die Achse der oberen Schrägfördererwalze 64 erfolgt mittels zweier Aktoren 66 in Form von Hydraulikzylindern, die auf beiden Seiten des Schrägfördererzusammenbaus 20 einen Endes am unteren, vorderen Ende des Fahrgestells 12 und anderen Endes rückwärtig des vorderen, unteren Endes des Gehäuses 62 des Schrägfördererzusammenbaus 20 angelenkt sind. Eine Steuerung (nicht gezeigt) steuert den Aktor 66 beim Erntebetrieb derart an, dass der Erntevorsatz 18 in einer gewünschten Höhe oder mit einer gewünschten Auflagekraft über den Boden des abzuerntenden Feldes bewegt wird. Das Gehäuse 62 des Schrägfördererzusammenbaus 20 umfasst in an sich bekannter Weise untere und obere Wände, die durch seitliche Wände untereinander verbunden sind.

Eine untere Schrägfördererwalze 80 ist drehbar am Gehäuse 62 gelagert. Ihre Drehachse 88 erstreckt sich quer zur Vorwärtsrichtung V und horizontal. Um die Schrägfördererwalzen 64, 80 läuft ein endloses Förderelement 82 mit Mitnehmern 84 um, das das Erntegut unterschlächtig fördert. Das Förderelement 82 ist dehnbar und umfasst vorzugsweise mehrere über die Breite des Gehäuses 62 verteilte Gummi-Gewebe-Riemen, die untereinander durch die Mitnehmer 84 verbunden sind. Der Antrieb des Förderelements 82 erfolgt über an seiner Innenseite angebrachte Nocken, die in entsprechende Ausnehmungen in der oberen Schrägfördererwalze 64 eingreifen, welche vom Verbrennungsmotor 58 her antreibbar ist. Die Mitnehmer 84 sind als U-förmige Stahlleisten ausgeführt, die sich über die Breite des Gehäuses 62 erstrecken, könnten aber auch aus anderem Material bestehen und einen anderen Querschnitt aufweisen. Zur Herstellung einer optimalen Verbindung zwischen den Mitnehmern 84 und dem Förderelement 82 sind Schraubbolzen in die Gummi-Gewebe-Riemen 88 einvulkanisiert.

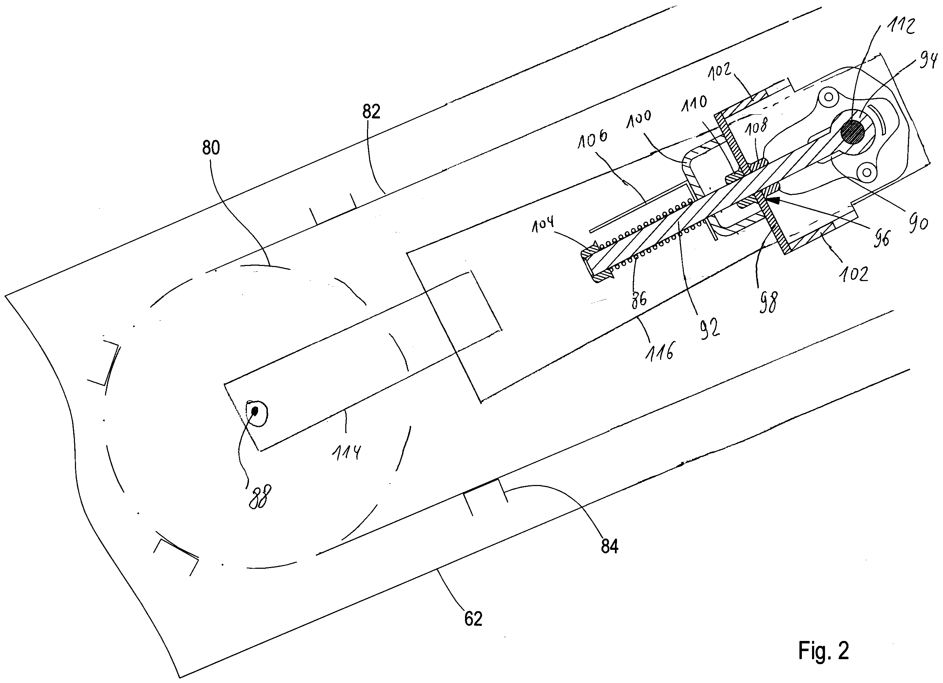

Das Förderelement 82 ist für den Betrieb derart zu spannen, dass die Mitnehmer 84 bei nicht am Boden des Gehäuses 62 entlang kratzen, was den Verschleiß und die Geräuschentwicklung minimiert, und außerdem ist sicherzustellen, dass die Nocken des Förderelements 82 nicht über die komplementären Antriebselemente (d.h. Zähne oder Nocken) der oberen Schrägfördererwalze 64 überspringen. Um die erforderliche Spannung des Förderelements 82 auf einfache Weise herstellen zu können, ist an beiden Enden der unteren Schrägfördererwalze 80 eine in der Figur 2 gezeigte Anordnung vorgesehen, mit welcher beide Seiten der unteren Schrägfördererwalze 80 durch eine Feder 86 in eine Soll-Position verbracht und dort arretiert werden können.

Die untere Schrägfördererwalze 80 umfasst sich im Betrieb nicht drehende Achsstummel 88, an denen sich die eigentliche untere Schrägfördererwalze 80 durch Drehlagerungen (nicht gezeigt) frei um ihre Längsachse drehbar abstützt. Die Achsstummel 88 sind mit Halterungen 114 verbunden, die ihrerseits an einem schwenkbaren Zwischenboden 116 befestigt sind, der sich zwischen den Trums des Förderelements 82 befindet und sich rückwärtig der unteren Schrägfördererwalze 80 nach hinten und oben erstreckt. Der schwenkbare Zwischenboden 116 ist an seinem rückwärtigen Ende an beiden Seiten jeweils mit einer Schwenkachse 112 verbunden, die sich durch ein Langloch 90 in der Seitenwand des Gehäuses erstreckt. Der Zwischenboden wird in der EP 1 769 670 A1, deren Offenbarung durch Verweis mit in die vorliegenden Unterlagen aufgenommen wird, im Detail beschrieben.

Die Schwenkachsen 112 durchdringen Langlöcher 90 in der Seitenwand des Gehäuses 62. Die Längsrichtung der Langlöcher 90 erstreckt sich entlang einer gedachten Verbindungsgeraden zwischen den Schrägfördererwalzen 64, 80 oder in einem spitzen Winkel dazu. Eine Verstellstange 92 ist mit ihrem hinteren Ende durch ein Lagerauge 94 an der Schwenkachse 112 befestigt und erstreckt sich parallel zur gedachten Verbindungsgeraden zwischen den Schrägfördererwalzen 64, 80. Die Verstellstange 94 durchdringt eine Öffnung 96 in einer mit der Seitenwand des Gehäuses 62 verbundenen Konsole 98, die sich quer zur gedachten Verbindungsgeraden zwischen den Schrägfördererwalzen 64, 80 erstreckt, sowie eine weitere Öffnung in einem U-Profil 100, das auf der der Schwenkachse 112 abgewandten Seite der Konsole 98 mit der Konsole 98 verbunden ist. Die Konsole 98 umfasst vordere Schenkel 102 beidseits des Langlochs 90. Am äußeren Ende der Verstellstange 92 ist auf ein Gewinde der Verstellstange 92 eine Mutter 104 aufgeschraubt, welche eine als schraubenförmige Druckfeder ausgeführte Feder 86 zwischen sich und dem U-Profil 100 einklemmt. Durch Verdrehen der Mutter 104 kann die Spannung der Feder 86 verändert werden und eine mit dem U-Profil 100 verbundene Skala oder Lehre 106 ermöglicht es, die Feder 86 in eine definierte Position vorzuspannen, die einer bestimmten Kraft der Feder entspricht. Auf Gewindebereiche der Verstellstange 92 sind weitere Muttern 108, 110 aufgeschraubt, die auch an beiden Seiten der Konsole 98 anliegen und die Verstellstange 92 in der in Figur 2 gezeigten Stellung der Muttern 108, 110 am Gehäuse 62 arretieren.

Nach alledem ergibt sich folgende Vorgehensweise, wenn das Förderelement 82 nach einer bestimmten Betriebsdauer oder nach Austausch mit einer definierten Spannung versehen werden soll. Eventuell noch vorhandenes Erntegut wird aus dem Schrägförderer 18 herausgefördert und er dann angehalten. Dann werden die Federn 86 an der dargestellten Position angebracht und durch die Muttern 104, deren Kragen mit dem äußeren Ende der Lehre 106 (oder einem bestimmten Punkt einer als Skala ausgeführten Lehre) in Deckung gebracht wird, mit einer gewünschten Kraft vorgespannt. Dann werden auf beiden Seiten des Schrägförderers 20 die Muttern 108 und 110 gelöst, d.h. durch Drehen in eine von der Konsole 98 beabstandete Position gebracht. Nunmehr ist die untere Schrägfördererwalze 80 gegenüber dem Gehäuse 62 entlang der gedachten Verbindungsgeraden zwischen den Schrägfördererwalzen 64, 80 zwar frei verschiebbar, da die Muttern 108, 110 gelöst sind, jedoch wird sie durch die Federn 86, deren Kraft einerseits über das U-Profil 100 und die Konsole 98 auf das Gehäuse 62 und andererseits über die Mutter 104, die Verstellstange 92,das Lagerauge 94, die Schwenkachse 112, den Zwischenboden 116, die Halterungen 114 und die Achsstummel 88 auf die untere Vorpresswalze 80 übertragen wird, von der oberen Vorpresswalze 64 hinfort entlang der gedachten Verbindungsgeraden zwischen den Schrägfördererwalzen 64, 80 nach vorn und unten gezogen. Dabei wird das Förderelement 82 mit einer durch die Federn 86 definierten Kraft gespannt und die untere Schrägfördererwalze 80 erreicht ihre Soll-Position. Nunmehr wird auf beiden Seiten des Schrägförderers 20 die der Schwenkachse 112 benachbarte Mutter 108 derart gedreht, dass sie in Anlage an die Konsole 98 gelangt. Durch diese Maßnahme wird erreicht, dass die untere Schrägfördererwalze 80 sich nicht näher als der nun erreichten Soll-Position entsprechend an die obere Schrägfördererwalze 64 annähern kann. Grundsätzlich wäre der Schrägförderer 20 jetzt betriebsbereit. Um unerwünschte Schwingungen zu vermeiden und die Federn 86 entlasten zu können, werden vorzugsweise auch die anderen Muttern 110 in Anlage an die Konsole 98 gebracht, um die untere Schrägfördererwalze 80 nunmehr am Gehäuse 62 zu arretieren. Die Federn 86 können dann mittels der Muttern 104 zur Verlängerung der Lebensdauer entspannt oder ganz abgenommen werden.

## Patentansprüche

1. Schrägfördererzusammenbau (20) für einen Mähdrescher (10), mit einem Gehäuse (62), an dessen rückwärtigem Ende eine obere Schrägfördererwalze (64) drehbar gelagert ist, einer am vorderen Ende des Gehäuses (62) drehbar gelagerten, unteren Schrägfördererwalze (80), und mit einem um die untere Schrägfördererwalze (80) und um die obere Schrägfördererwalze (64) umlaufenden, endlosen Förderelement (82) aus einem in sich flexiblen Material mit daran befestigten Mitnehmern (84), wobei eine erste der Schrägfördererwalzen gegenüber dem Gehäuse (62) entlang einer gedachten Verbindungsgeraden zwischen den Schrägfördererwalzen (64, 80) auf die zweite Schrägfördererwalze (80) zu und von ihr fort bewegbar angebracht ist und die erste Schrägfördererwalze (80) mit einer Feder (86) koppelbar ist, welche die erste Schrägförderwalze (80) mit einer von der zweiten Schrägfördererwalze (64) fort gerichteten Kraft vorspannt, das Förderelement (82) mit einer definierten Spannung beaufschlagt und die erste Schrägfördererwalze (80) in eine sich durch die Kraft der Feder (86) ergebende Soll-Position verbringt, **dadurch gekennzeichnet, dass** die Bewegung der ersten Schrägfördererwalze (80) in Richtung auf die zweite Schrägfördererwalze (64) zu auf die Soll-Position der ersten Schrägfördererwalze (80) begrenzbar ist.

2. Schrägfördererzusammenbau (20) nach Anspruch 1, wobei die erste Schrägfördererwalze (80) in der Soll-Position arretierbar ist.

3. Schrägfördererzusammenbau (20) nach Anspruch 1 oder 2, wobei die erste Schrägförderwalze (80) die untere Schrägfördererwalze (80) ist und/oder die obere Schrägfördererwalze (64) antreibbar ist.

4. Schrägfördererzusammenbau (20) nach einem der vorhergehenden Ansprüche, wobei die erste Schrägfördererwalze (80) an beiden Enden bewegungsbeschränkbar oder arretierbar und mit je einer Feder (86) koppelbar ist.

5. Schrägfördererzusammenbau (20) nach einem der vorhergehenden Ansprüche, wobei die Feder (86) entlastbar und/oder abnehmbar ist und anhand einer Lehre (106) oder Skala mit einer definierten Vorspannung belastbar ist.

6. Schrägfördererzusammenbau (20) nach einem der vorhergehenden Ansprüche, wobei eine sich quer zur gedachten Verbindungsgeraden zwischen den Schrägfördererwalzen (64, 80) erstreckende, mit einer Öffnung (96) versehene Konsole (98) an der Außenseite des Gehäuses (62) angebracht ist, eine insbesondere durch einen Zwischenboden (116) mit der Achse (88) der ersten Schrägfördererwalze (80) gekoppelte Schwenkachse (112) ein sich entlang der gedachten Verbindungsgeraden erstreckendes Langloch (90) des Gehäuses (62) durchdringt und mit einer sich entlang der Verbindungsgeraden erstreckenden Verstellstange (92) verbunden ist, welche die Öffnung (96) in der Konsole durchdringt und am äußeren, von der Achse beabstandeten Ende der Verstellstange (92) mit einem ersten Ende der Feder (86) gekoppelt ist, die sich mit ihrem zweiten Ende am Gehäuse (62), insbesondere an einem mit der Konsole (98) gekoppelten U-Profil (98), abstützt, und wobei die Begrenzung der Bewegung der ersten Schrägfördererwalze (80) auf die Soll-Position zwischen der Verstellstange (92) und der Konsole (98) vorgesehen ist.

7. Schrägfördererzusammenbau (20) nach Anspruch 6, wobei die Feder (86) eine Schraubenfeder ist, die auf Druck oder Zug arbeitet.

8. Schrägfördererzusammenbau (20) nach Anspruch 6 oder 7, wobei die Begrenzung der Bewegung der ersten Schrägfördererwalze (80) auf die Soll-Position durch eine an der Konsole (98) zur Anlage kommende Mutter (108) realisiert ist, die mit einem Gewinde der Verstellstange (92) zusammenwirkt.

9. Schrägförderzusammenbau (20) nach Anspruch 8, wobei zwecks Arretierung der ersten Schrägfördererwalze (80) eine mit einem Gewinde der Verstellstange (92) zusammenwirkende, zweite Mutter (110) an einer zweiten Seite der Konsole (98) zur Anlage bringbar ist.

10. Mähdrescher (10) mit einem Schrägfördererzusammenbau (20) nach einem der vorhergehenden Ansprüche.

## Claims

1. Feeder house assembly (20) for a combine harvester (10), having a housing (62), at the rear end of which an upper feeder house roller (64) is mounted in a rotatable manner, a lower feeder house roller (80) mounted in a rotatable manner at the front end of the housing (62), and having an endless conveying element (82) that circulates about the lower feeder house roller (80) and about the upper feeder house roller (64) and is made of an intrinsically flexible material with carry-along elements (84) fastened thereto, wherein a first of the feeder house rollers is fitted with respect to the housing (62) so as to be movable to and away from the second feeder house roller (80) along an imaginary connecting line between the feeder house rollers (64, 80), and the first feeder house roller (80) is able to be coupled to a spring (86), which preloads the first feeder house roller (80) with a force directed away from the second feeder house roller (64), applies a defined tension to the conveying element (82) and moves the first feeder house roller (80) into a desired position brought about by the force of the spring (86), **characterized in that** the movement of the first feeder house roller (80) in the direction of the second feeder house roller (64) is able to be limited to the desired position of the first feeder house roller (80).

2. Feeder house assembly (20) according to Claim 1, wherein the first feeder house roller (80) is lockable in the desired position.

3. Feeder house assembly (20) according to Claim 1 or 2, wherein the first feeder house roller (80) is the lower feeder house roller (80) and/or the upper feeder house roller (64) is drivable.

4. Feeder house assembly (20) according to one of the preceding claims, wherein the first feeder house roller (80) is able to be limited in terms of movement or lockable at both ends and is able to be coupled to respective springs (86).

5. Feeder house assembly (20) according to one of the preceding claims, wherein the spring (86) is able to be relieved of load and/or is removable and is able to be loaded with a defined preload using a gauge (106) or scale.

6. Feeder house assembly (20) according to one of the preceding claims, wherein a bracket (98) that extends transversely to the imaginary connecting line between the feeder house rollers (64, 80) and is provided with an opening (96) is fitted on the outer side of the housing (62), a pivot pin (112) coupled in particular through an intermediate floor (116) to the axle (88) of the first feeder house roller (80) passes through a slot (90), extending along the imaginary connecting line, in the housing (62) and is connected to an adjusting rod (92) extending along the connecting line, said adjusting rod (92) passing through the opening (96) in the bracket and being coupled, at the outer end, spaced apart from the axle, of the adjusting rod (92), to a first end of the spring (86) which is supported, with its second end, on the housing (62), in particular on a U profile (98) coupled to the bracket (98), and wherein the limitation of the movement of the first feeder house roller (80) to the desired position is provided between the adjusting rod (92) and the bracket (98).

7. Feeder house assembly (20) according to Claim 6, wherein the spring (86) is a helical spring, which works by compression or tension.

8. Feeder house assembly (20) according to Claim 6 or 7, wherein the limitation of the movement of the first feeder house roller (80) to the desired position is realized by a nut (108) that comes to bear on the bracket (98) and cooperates with a thread on the adjusting rod (92).

9. Feeder house assembly (20) according to Claim 8, wherein, in order to lock the first feeder house roller (80), a second nut (110) that cooperates with a thread on the adjusting rod (92) is able to be brought to bear on a second side of the bracket (98) .

10. Combine harvester (10) having a feeder house assembly (20) according to one of the preceding claims.

## Revendications

1. Assemblage de convoyeur-élévateur (20) pour une moissonneuse-batteuse (10), comprenant un boîtier (62) à l'extrémité arrière duquel est supporté à rotation un cylindre de convoyeur-élévateur supérieur (64), un cylindre de convoyeur-élévateur inférieur (80) supporté à rotation à l'extrémité avant du boîtier (62) et un élément de transport sans fin (82) circulant autour du cylindre de convoyeur-élévateur inférieur (80) et autour du cylindre de convoyeur-élévateur supérieur (64), constitué d'un matériau flexible en soi sur lequel sont fixés des éléments d'entraînement (84), un premier des cylindres de convoyeur-élévateur étant monté de manière déplaçable par rapport au boîtier (62) le long d'une droite de liaison imaginaire entre les cylindres de convoyeur-élévateur (64, 80) vers le deuxième cylindre de convoyeur-élévateur (80) et en avant de celui-ci, et le premier cylindre de convoyeur-élévateur (80) pouvant être accouplé à un ressort (86) qui précontraint le premier cylindre de convoyeur-élévateur (80) avec une force orientée vers l'avant depuis le deuxième cylindre de convoyeur-élévateur (64), sollicite l'élément de transport (82) avec une tension définie et amène le premier cylindre de convoyeur-élévateur (80) dans une position de consigne résultant de la force du ressort (86), **caractérisé en ce que** le déplacement du premier cylindre de convoyeur-élévateur (80) dans la direction du deuxième cylindre de convoyeur-élévateur (64) peut être limité à la position de consigne du premier cylindre de convoyeur-élévateur (80) .

2. Assemblage de convoyeur-élévateur (20) selon la revendication 1, dans lequel le premier cylindre de convoyeur-élévateur (80) peut être bloqué dans la position de consigne.

3. Assemblage de convoyeur-élévateur (20) selon la revendication 1 ou 2, dans lequel le premier cylindre de convoyeur-élévateur (80) est le cylindre de convoyeur-élévateur inférieur (80) et/ou le cylindre de convoyeur-élévateur supérieur (64) peut être entraîné.

4. Assemblage de convoyeur-élévateur (20) selon l'une quelconque des revendications précédentes, dans lequel le premier cylindre de convoyeur-élévateur (80) peut être bloqué ou limité dans son mouvement au niveau des deux extrémités et peut être accouplé à chaque fois à un ressort (86).

5. Assemblage de convoyeur-élévateur (20) selon l'une quelconque des revendications précédentes, dans lequel le ressort (86) peut être détendu et/ou enlevé et peut être sollicité avec une précontrainte définie à l'aide d'une jauge (106) ou d'une échelle.

6. Assemblage de convoyeur-élévateur (20) selon l'une quelconque des revendications précédentes, dans lequel une console (98) s'étendant transversalement à la droite de liaison imaginaire entre les cylindres de convoyeur-élévateur (64, 80), pourvue d'une ouverture (96), est montée sur le côté extérieur du boîtier (62), un axe de pivotement (112) accouplé notamment par un fond intermédiaire (116) à l'axe (88) du premier cylindre de convoyeur-élévateur (80) traverse un trou oblong (90) du boîtier (62) s'étendant le long de la droite de liaison imaginaire et est connecté à une tige de réglage (92) s'étendant le long de la droite de liaison, laquelle traverse l'ouverture (96) dans la console et est accouplée, au niveau de l'extrémité extérieure de la tige de réglage (92) espacée de l'axe, à une première extrémité du ressort (86), qui s'appuie par sa deuxième extrémité contre le boîtier (62), en particulier contre un profilé en forme de U (98) accouplé à la console (98), et la limitation du déplacement du premier cylindre de convoyeur-élévateur (80) à la position de consigne étant prévue entre la tige de réglage (92) et la console (98) .

7. Assemblage de convoyeur-élévateur (20) selon la revendication 6, dans lequel le ressort (86) est un ressort à boudin qui fonctionne en pression ou en traction.

8. Assemblage de convoyeur-élévateur (20) selon la revendication 6 ou 7, dans lequel la limitation du déplacement du premier cylindre de convoyeur-élévateur (80) à la position de consigne est réalisée par un écrou (108) venant en appui contre la console (98), lequel coopère avec un filetage de la tige de réglage (92).

9. Assemblage de convoyeur-élévateur (20) selon la revendication 8, dans lequel, afin de réaliser le blocage du premier cylindre de convoyeur-élévateur (80), un deuxième écrou (110) coopérant avec un filetage de la tige de réglage (92) peut être amené en appui contre un deuxième côté de la console (98).

10. Moissonneuse-batteuse (10) comprenant un assemblage de convoyeur-élévateur (20) selon l'une quelconque des revendications précédentes.
